# EUROPEAN PATENT APPLICATION

(11) **EP 2 333 366 A1**
(43) Date of publication of application: **15.06.2011**
(21) Application number: 09811467.1
(22) Date of filing: 31.08.2009
(51) Int. Cl.: F16C 33/10, F16C 17/10, F16C 33/12, F16C 33/14

(54) **SINTERED BEARING AND PROCESS FOR PRODUCING SAME**

(30) Priority: 05.09.2008 JP 2008228376; 08.10.2008 JP 2008261784
(71) Applicant: NTN Corporation, Osaka-shi, Osaka 550-0003 (JP)
(72) Inventor: SATO Norihide, Kuwana-shi Mie 511-0811 (JP); OMORI Akihiro, Kuwana-shi Mie 511-0811 (JP); MURAMATSU Katsutoshi, Kuwana-shi Mie 511-0811 (JP); MURAKAMI Kazutoyo, Kuwana-shi Mie 511-0811 (JP)
(74) Representative: Mischung, Ralf
(86) International application number: PCT/JP2009/065169
(87) International publication number: WO 2010/026941

(57) **Abstract**

Impregnation of a resin into a sintered body (15) enables reduction in an amount of oil to be impregnated into inner pores. Further, by forming pores into which the resin is unimpregnated in a bearing surface (inner peripheral surface (15a)), it is possible to supply oil retained in the pores into bearing gaps and to cause the pores to function as filters for catching contaminants such as abrasion powder in a bearing.

## Description

### Technical Field

The present invention relates to a manufacturing method for a sintered bearing having a bearing surface.

### Background Art

The sintered bearing is formed by sintering a compression-molded body of metal powder, and characterized by having innumerable pores therein. For example, Patent Document 1 discloses a bearing device including a sintered bearing (bearing sleeve) having inner pores impregnated with oil and a shaft member inserted along an inner periphery of the sintered bearing, the shaft member being rotatably supported by oil films generated in radial bearing gaps between an inner peripheral surface of the sintered bearing and an outer peripheral surface of the shaft member. When the shaft member is rotated, the oil impregnated in the sintered bearing is supplied from pores formed in the bearing surface into the radial bearing gaps. With this, lubricancy is enhanced between the shaft member and the sintered bearing. A seal space is formed in the bearing device, and volume expansion of the lubricating oil loaded in the bearing device is absorbed in the seal space, the volume expansion being involved in rise in temperature of the lubricating oil. In this manner, leakage of the lubricating oil to an outside is prevented.

Further, for example, Patent Document 2 discloses a bearing device including a sintered bearing having inner pores impregnated with oil and a shaft member inserted along an inner periphery of the sintered bearing. When the shaft member is rotated, the oil oozes from pores formed in a bearing surface of the sintered bearing (hereinafter, referred to as surface pores), and the oil is supplied into a sliding portion between the sintered bearing and the shaft member, with the result that lubricancy is enhanced.

- [Patent Document 1]: JP 2007-250095 A
- [Patent Document 2]: JP 06-173953 A
- [Patent Document 3]: JP 2005-337274 A
- [Patent Document 4]: JP 2004-108461 A

### Disclosure of the Invention

### Problems to be solved by the Invention

However, in the bearing device as disclosed in Patent Document 1, the lubricating oil is impregnated into the inner pores of the sintered bearing. As a result, an amount of the oil to be loaded in the inside of the bearing is increased, and a change in volume of the oil, which is involved with a change in temperature thereof, is promoted in accordance therewith. Accordingly, it is necessary to increase the volume of the seal space for absorbing the change in volume of the oil, which may lead to a risk of deterioration of bearing rigidity owing to an increase in the axial dimension of the bearing device or owing to reduction of a bearing span.

For example, as disclosed in Patent Document 3, when the resin is impregnated in the inner pores of the sintered bearing and cured therein, the oil is unimpregnated into the inner pores of the sintered bearing. As a result, it is possible to decrease the amount of the oil to be loaded in the bearing, and hence possible to avoid the above-mentioned failure. However, when the resin is impregnated into the entire sintered bearing, it is impossible to supply the oil from the pores formed in the bearing surface of the sintered bearing into the bearing gaps. Thus, there may arise a risk of poor lubrication owing to lack of the oil.

Further, in the bearing device as disclosed in Patent Document 2, under low temperature immediately after start of the rotation of the shaft member or the like, the impregnated oil aggregates into the pore portions in the sintered bearing owing to volumetric shrinkage thereof. Thus, oil cannot be sufficiently interposed in the sliding portion, and hence there may arise a risk of poor lubrication owing to lack of oil. For example, as disclosed in Patent Document 4, when the surface of the sintered bearing is coated with a resin, the surface pores of the sintered bearing are sealed. The above-mentioned poor lubrication owing to aggregation of the oil into the sintered bearing does not occur even under low temperature. However, when the surface pores of the sintered bearing are completely sealed, the oil in the sintered bearing cannot be supplied to the sliding portion. Thus, in contrast, other than under low temperature, there may arise, under high temperature and at the time of high-speed sliding in particular, a risk of poor lubrication owing to lack of an amount of the oil to be supplied.

It is therefore an object of the present invention to provide a sintered bearing capable of reducing the amount of the oil to be impregnated therein and supplying the oil from the bearing surface.

It is therefore another object of the present invention to provide a sintered bearing capable of preventing poor lubrication by constantly supplying a sufficient amount of oil to the sliding portion irrespective of the temperature or a sliding speed of the bearing.

### Means for solving the Problems

In order to achieve the above-mentioned object, a first invention of the subject application provides a sintered bearing, which is obtained by impregnating sealant into inner pores of a sintered body obtained by sintering a compression-molded body of metal powder, in which pores unimpregnated with the sealant are formed in a bearing surface.

By impregnating the sealant into the sintered body as described above, it is possible to reduce an amount of oil to be impregnated into the inner pores. Further, by forming the pores unimpregnated with the sealant in the bearing surface, it is possible to retain a lubricant (oil) in the pores, and hence possible to enhance lubricancy by supplying the oil in the sliding portion. Further, the pores formed in the bearing surface exert a filtering effect by which abrasion powder and the like in the bearing are caught, with the result that it is possible to prevent generation of contaminants.

Examples of the usable sealant include a resin having low viscosity, such as an acrylic resin or an epoxy resin, or low-melting metal such as tin, zinc, or the like. Note that, the low-melting metal represents a metal material melt at a temperature lower than a sintering temperature of the sintered body.

The sintered bearing as described above can be manufactured by forming a sintered body through sintering of a compression-molded body of metal powder, and by forming pores, into which the sealant is unimpregnated, in the bearing surface by impregnating the sealant from a region except the bearing surface of a surface of the sintered body.

For example, in the case where the sintered body has a cylindrical shape in which an inner peripheral surface constitutes the bearing surface, the sealant can be impregnated into the pores from a region except the bearing surface (outer peripheral surface) by being caused to drip onto the outer peripheral surface of the sintered body. Alternatively, by rolling the sintered body in a vessel containing sealant, the sealant can be impregnated into the pores from the outer peripheral surface. Further, by immersing the sintered body in the sealant while the bearing surface is covered with coating, the sealant can be impregnated from the region except the bearing surface.

When sizing (re-compression) is effected after impregnation of the sealant into the sintered body, the sealant cured in the pores of the sintered body elastically bounds back. Thus, there is a risk that dimensional accuracy of the sintered bearing (surface accuracy of the bearing surface, inner diameter dimension, outer diameter dimension, axial dimension, and the like) cannot be sufficiently enhanced. Accordingly, it is preferred that the impregnation of the sealant be effected after the sizing of the sintered body. Note that, as described above, by impregnating the resin from the region except the bearing surface, the pores unimpregnated with the resin are left in the bearing surface. As a result, the bearing surface is more easily subjected to plastic deformation, and the bearing surface can be processed by sizing with high accuracy. Accordingly, when there is no problem with the dimensional accuracy of the portions except the bearing surface, the sizing may be effected on the sintered body after impregnation of the sealant.

Further, in order to achieve the above-mentioned object, a second invention of the subject application provides a sintered bearing including innumerable pores formed in a surface and an inside thereof and a bearing surface, in which sealant is impregnated into pores formed at least in the bearing surface, the pores impregnated with the sealant constituting recessed portions in the bearing surface.

As described above, in the present invention, by impregnating the sealant into the pores formed in the bearing surface so as to seal the same, it is possible to suppress aggregation of the oil existing near the bearing surface under low temperature from the pores to the inner side of the bearing, the aggregation being caused by volumetric shrinkage of the oil. Thus, it is possible to retain the oil within the sliding portion even under low temperature, and hence possible to prevent poor lubrication. Further, by forming the recessed portions in the bearing surface, it is possible to cause the recessed portions to function as oil pools. Thus, by supplying the oil retained in the recessed portions to the sliding portion, it is possible to prevent poor lubrication even at the time of high-speed sliding. In this case, by constituting the recessed portions with the pores in the surface, which are impregnated with the sealant, at least a part of the recessed portions is constituted by the sealant. As a result, the sealant is brought into contact with the oil retained in the recessed portions. Accordingly, it is possible to reliably retain the oil in the recessed portions by impregnating sealant excellent in lipophilicity with oil into the pores.

In the bearing surface, the regions except the recessed portions may be brought into contact with a mating member supported by a sintered bearing. Accordingly, when the region is formed of sintered metal, it is possible to enhance abrasion resistance of the bearing surface. Meanwhile, in the case where the mating member supported by the sintered bearing is made of metal, when the above-mentioned regions of the sintered bearing are also made of metal, abnormal noise (so-called scratching noise) may be generated owing to contact between metals. The abnormal noise is suppressed merely by, for example, forming a so-called overlay, which is obtained by covering at least a part of the regions of the sintered bearing with a resin so that the overlay portion is subjected to contact with the mating member.

When the central portions of the surface of the sealant impregnated into the pores constituting the recessed portions are recessed in advance, more oil can be retained in the recessed portions, and the oil can be more easily retained in the recessed portions.

The recessed portions can be formed, for example, by retracting the surface of the sealant impregnated into the pores in the bearing surface from the bearing surface to the far portion (inner portion) owing to volumetric shrinkage at the time of solidification of the sealant. Further, instead of impregnating the sealant into 100% of the pores of the sintered bearing, by leaving the pores unimpregnated with the sealant inside of the sintered bearing, it is possible to reliably form the recessed portions in the bearing surface. That is, the sealant impregnated from the pores formed in the bearing surface is cured while moving by a capillary action to the pore portions left in the inside of the sintered bearing, and hence the surface constituted by the sealant is retracted to the inner side of the bearing. With this, it is possible to reliably form the recessed portions in the bearing surface.

When a dynamic pressure generating portion is provided on the bearing surface, pressure of an oil film interposed in the sliding portion is increased, and hence it is possible to enhance bearing rigidity. When the dynamic pressure generating portion is provided to the sintered bearing, oil increased in pressure moves from the surface pores of the sintered bearing to the inner side thereof, with the result that the decrease in pressure, that is, so-called "dynamic-pressure absence" may occur. When a resin is impregnated into the surface pores of the bearing surface as described above, it is possible to prevent dynamic-pressure absence, to reliably maintain the pressure generated in the oil film, and hence possible to enhance bearing rigidity.

The sintered bearing as described above is manufactured by sintering a compression-molded body of metal powder so as to form a sintered body, by impregnating the sealant into at least the surface pores of the bearing surface of the sintered body, and by constituting the recessed portions in at least a part of the bearing surface with the pores impregnated with the sealant. In this case, there is a risk that the recessed portions are caused to disappear when sizing is effected after the recessed portions are formed in the sintered body. Thus, it is preferred that impregnation of a resin be effected after the sizing of the sintered body.

### Effects of the Invention

As described above, according to the invention of the subject application, it is possible to provide the sintered bearing capable of reducing the amount of the oil to be impregnated therein and supplying the oil from the bearing surface.

Further, according to the invention of the subject application, it is possible to prevent poor lubrication by constantly supplying a sufficient amount of oil to the sliding portion even under low temperature or at the time of high-speed sliding, and hence possible to prevent poor lubrication.

### Best Modes for carrying out the Invention

In the following, description is made on embodiments of a first invention of the subject application with reference to the drawings.

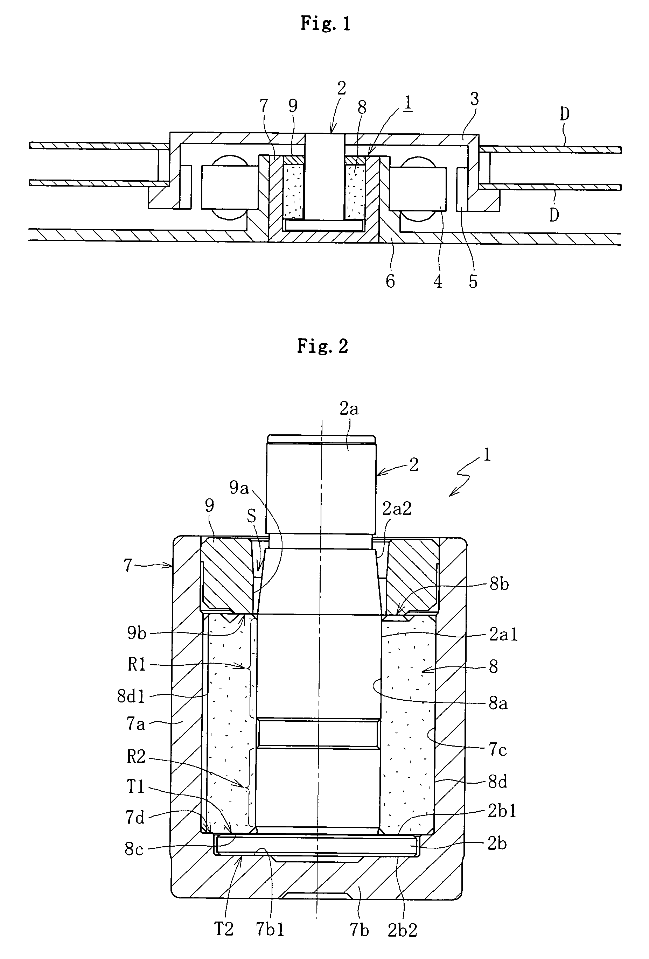

FIG. 1 illustrates a spindle motor for an information apparatus including a sintered bearing (bearing sleeve 8) according to an embodiment of the first invention of the subject application. The spindle motor is used for a disk drive such as an HDD and includes a fluid dynamic bearing device 1 for rotatably supporting a shaft member 2 in a non-contact manner, a disk hub 3 mounted to the shaft member 2, a stator coil 4 and a rotor magnet 5 which are opposed to each other through an intermediation of, for example, a gap in a radial direction. The stator coil 4 is attached to an outer periphery of a motor bracket 6, and the rotor magnet 5 is attached to an inner periphery of the disk hub 3. One or multiple magnetic disks (two in FIG. 1) D are held on an outer periphery of the disk hub 3. In the spindle motor structured as described above, the rotor magnet 5 is rotated when the stator coil 4 is energized. In accordance therewith, the disk hub 3 and the disks D held by the disk hub 3 are rotated integrally with the shaft member 2.

The fluid dynamic bearing device 1 illustrated in FIG. 2 includes, as main components, the shaft member 2, a housing 7 having a bottomed-cylindrical shape, the bearing sleeve 8 serving as a sintered bearing, and a seal member 9. Note that, for the sake of convenience, description hereinafter is made on the assumption that the closed side of the housing 7 in the axial direction is a lower side and the open side thereof is an upper side.

The shaft member 2 is formed of a metal material such as stainless steel, and includes a shaft portion 2a and a flange portion 2b provided at a lower end of the shaft portion 2a. The shaft portion 2a includes a cylindrical outer peripheral surface 2a1 and a tapered surface 2a2 gradually reduced upward in diameter. The outer peripheral surface 2a1 of the shaft portion 2a is arranged on the inner periphery of the bearing sleeve 8 and the tapered surface 2a2 is arranged on the inner periphery of the seal member 9. The shaft member 2 may be constituted by the shaft portion 2a and the flange portion 2b integrated with each other, or may be partially (both end surfaces 2b1 and 2b2 of flange portion 2b, for example) formed of a resin. Note that, the flange portion 2b is not necessarily provided. For example, it is possible to constitute a so-called pivot bearing in which a spherical portion is formed at an end portion of the shaft portion and the spherical portion and a bottom portion 7b of the housing 7 are held in sliding contact with each other.

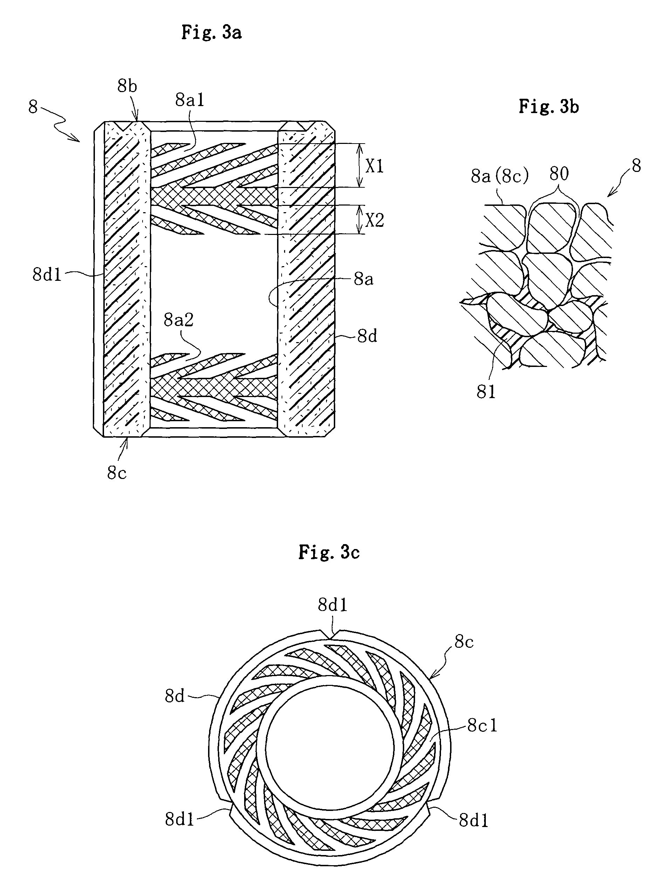

The bearing sleeve 8 is constituted by a sintered body obtained by sintering a compression-molded body of metal powder, which is formed into a substantially cylindrical shape in this embodiment. An inner peripheral surface 8a of the bearing sleeve 8 functions as a radial bearing surface, and a lower end surface 8c thereof functions as a thrust bearing surface. The region except the bearing surface of the bearing sleeve 8 (radial bearing surface and thrust bearing surface, hereinafter the same applies) is impregnated with, for example, a resin as sealant. In FIGS. 3(a) and 3(b), the region impregnated with a resin is illustrated by hatching. In this embodiment, in the surface of the bearing sleeve 8, the inner peripheral surface 8a (radial bearing surface), the lower end surface 8c (thrust bearing surface), and an upper end surface 8b are unimpregnated with a resin. Pores formed in an outer peripheral surface 8d and inner pores communicating with the pores are impregnated with a resin. With this, the inner peripheral surface 8a and the lower end surface 8c constituting the bearing surfaces are formed of a metal material (copper or copper and steel in this embodiment) of a base material of sintered metal, and innumerable pores unimpregnated with a resin are formed over the entire region of the bearing surface. Specifically, as conceptually illustrated in FIG. 3(b), in pores 80 communicating with the bearing surface 8a (8c), there are formed regions up to a predetermined depth, where a resin is unimpregnated (region where a resin does not exist at all), and lubricating oil can be retained in those regions.

On the inner peripheral surface 8a of the bearing sleeve 8, radial dynamic pressure generating portions for generating dynamic pressure effect in fluid films (oil films) in radial bearing gaps. In this embodiment, as illustrated in FIG. 3(a), two dynamic pressure groove regions where herringbone dynamic pressure grooves 8a1 and 8a2 are respectively arranged are formed separately from each other in the axial direction. In the two dynamic pressure groove regions, portions except the dynamic pressure grooves 8a1 and 8a2, which are illustrated by cross-hatching, constitute hill portions. In the upper dynamic pressure groove region, the dynamic pressure grooves 8a1 are formed asymmetrically in the axial direction. Specifically, with respect to a belt portion formed at substantially the central portion in the axial direction of the hill portion, an axial dimension X1 of the upper grooves is larger than an axial dimension X2 of the lower grooves (X1>X2). In the lower dynamic pressure groove region, the dynamic pressure grooves 8a2 are formed symmetrically in the axial direction. Owing to imbalance of pumping capacity in the upper and lower dynamic pressure groove regions described above, during rotation of the shaft member 2, oil filled between the inner peripheral surface 8a of the bearing sleeve 8 and the outer peripheral surface of the shaft portion 2a is pressed downward.

On the lower end surface 8c of the bearing sleeve 8, there is formed a thrust dynamic pressure generating portion for generating dynamic pressure effect in an oil film in a thrust bearing gap. In this embodiment, as illustrated in FIG. 3(c), the thrust dynamic pressure generating portion has a spiral pattern. In the outer peripheral surface 8d of the bearing sleeve 8, axial grooves 8d1 are formed at equiangular multiple points (three points, for example). In a state in which the outer peripheral surface 8d of the bearing sleeve 8 and an inner peripheral surface 7c of the housing 7 are fixed to each other, the axial grooves 8d1 function as communication paths of oil, and the communication paths are capable of maintaining pressure balance in the bearing within an appropriate range.

The housing 7 has a cup shape in which an axial side thereof is opened and a cylindrical side portion 7a having an inner periphery on which the bearing sleeve 8 is retained and the bottom portion 7b closing the lower end of the side portion 7a are integrated with each other. Materials for the housing 7 are not particularly limited, and include metal such as brass or an aluminum alloy, a resin, and an inorganic material such as glass. Examples of the usable resin materials include both a thermoplastic resin and a thermoplastic resin. Further, when necessary, it is possible to use a resin composite obtained by mixing various additives such as glass fiber, a carbon nano material such as carbon fiber or carbon black, and graphite. In an upper end surface 7b1 of the bottom portion 7b of the housing 7, there are formed, for example, spiral dynamic pressure grooves as a thrust dynamic pressure generating portion for generating dynamic pressure effect in an oil film in a thrust bearing gap (not shown).

The seal member 9 is annularly formed of a resin material or a metal material, and is arranged on the inner periphery of the upper end portion of the side portion 7a of the housing 7. An inner peripheral surface 9a of the seal member 9 is opposed in the radial direction to the tapered surface 2a2 provided on the outer periphery of the shaft portion 2a, and a seal space S gradually reduced downward in radial dimension is formed therebetween. By a capillary force of the seal space S, the lubricating oil is drawn into the inner side of the bearing, and leakage of the oil is prevented. In this embodiment, the tapered surface 2a2 is formed on the shaft portion 2a side, and hence the seal space S functions as a centrifugal seal.

The oil level of the lubricating oil filling the inner space of the housing 7 sealed with the seal member 9 is maintained within the range of the seal space S. That is, the seal space S has a volume sufficient for absorbing change in volume of the lubricating oil. In this embodiment, as described above, the inner pores of the bearing sleeve 8 are impregnated with a resin. Thus, an amount of oil intruding into the inner pores is reduced, and hence the total amount of the oil filling the inside of the bearing is reduced. Accordingly, in comparison with the case where the inner pores of the bearing sleeve 8 are unimpregnated with a resin, the change in volume of the oil in accordance with change in temperature is reduced, and hence the volume of the seal space S can be reduced. With this, it is possible to reduce the axial dimension of the seal member 9, and hence the fluid dynamic bearing device 1 is downsized. Alternatively, without changing the size of the apparatus, it is possible to enhance bearing rigidity (moment rigidity, in particular) by increasing an axial interval (bearing span) between first and second radial bearing portions R1 and R2.

When the shaft member 2 is rotated in the fluid dynamic bearing device 1 structured as described above, there are formed radial bearing gaps between the inner peripheral surface 8a (radial bearing surface) of the bearing sleeve 8 and the outer peripheral surface 2a1 of the shaft member 2a. Pressure of the oil films generated in those radial bearing gaps is increased by the dynamic pressure grooves 8a1 and 8a2 formed in the inner peripheral surface 8a of the bearing sleeve 8. As a result, there are constituted the first radial bearing portion R1 and the second radial bearing portion R2 which support the shaft portion 2a in a non-contact manner by the dynamic pressure.

Simultaneously, oil films are formed in the thrust bearing gap between the upper end surface 2b1 of the flange portion 2b and the lower end surface 8c of the bearing sleeve 8 (thrust bearing surface) and in the thrust bearing gap between the lower end surface 2b2 of the flange portion 2b and the upper end surface 7b1 of the bottom portion 7b of the housing 7. The pressure of the oil films is increased by the dynamic pressure effect of the dynamic pressure grooves. As a result, there are constituted a first thrust bearing portion T1 and a second thrust bearing portion T2 which support the flange portion 2b in both the thrust directions in a non-contact manner by the dynamic pressure effect.

In this case, as described above, the bearing surface (inner peripheral surface 8a and lower end surface 8c) of the bearing sleeve 8 is unimpregnated with a resin, and hence the pores formed in the bearing surface may be caused to function as oil pools. By supplying the oil retained in the pores into the radial bearing gaps or the thrust bearing gaps, lubricancy between the shaft member 2 and the bearing sleeve 8 can be enhanced. Further, the pores formed in the bearing surface function as filters for catching abrasion powder generated by contact between the bearing sleeve 8 and the shaft member 2, and hence it is possible to prevent contaminants from being mixed into the oil films in the bearing gaps. In particular, the multiple pores formed in the bearing surface are communicated with each other in the bearing sleeve 8 so that the oil is caused to flow through paths in the inside of the bearing, with the result that the filtering effect can be enhanced.

In the following, a manufacturing method for the sintered bearing (bearing sleeve 8) according to an embodiment of the present invention is described with reference to the drawings. The bearing sleeve 8 is manufactured through a compression-molding step (refer to FIGS. 4), a sintering step (not shown), a sizing step (refer to FIGS. 5), and a resin-impregnating step (refer to FIGS. 6).

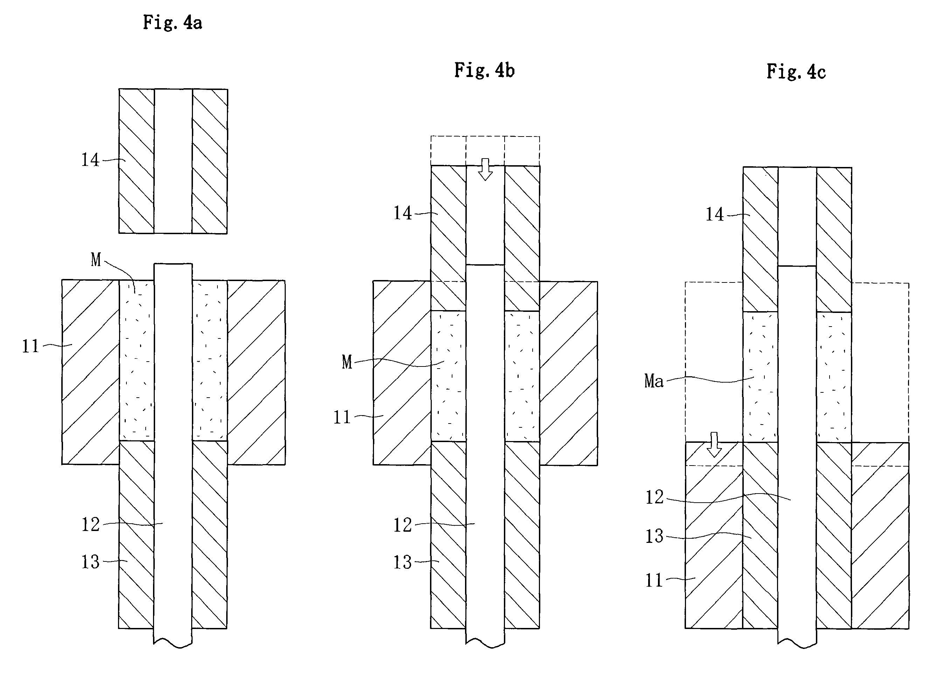

In the compression-molding step, first, as illustrated in FIG. 4(a), metal powder M is loaded in a cylindrical cavity surrounded by a die 11, a core rod 12, and a lower punch 13. Examples of the metal powder M loaded to be used include copper powder, copper alloy powder, or steel powders mixed therewith. When necessary, an appropriate amount of graphite or the like is added or mixed with respect to the metal powder. In this state, an upper punch 14 is lowered so as to compress the metal powder M from the upper side in the axial direction (refer to FIG. 4(b)). After that, a compression-molded body Ma is demolded from the die (refer to FIG. 4(c)).

In the sintering step, the compression-molded body Ma is sintered at a predetermined sintering temperature. In this manner, a cylindrical sintered body can be obtained. The sintering step is performed, for example, in vacuum or in an inert gas atmosphere, and is sintered at a predetermined sintering temperature. As described above, when the copper powder or steel powder is used as the metal powder M, the sintering temperature is set approximately within the range of from 700 to 1,100°C.

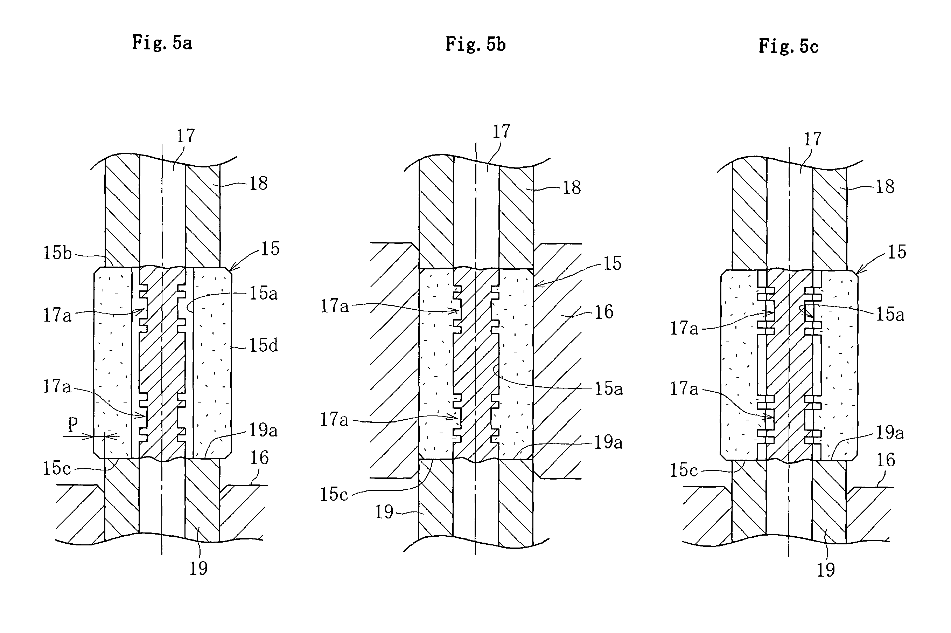

In the sizing step, dimensions of an inner peripheral surface, an outer peripheral surface, and an axial dimension of a sintered body 15 are corrected to appropriate dimensions, and the dynamic pressure generating portions are formed on the inner peripheral surface and the lower end surface. Specifically, first, in the state in which the sintered body 15 is supported (bound) from both sides in the axial direction by the upper and lower punches 18 and 19 of the sintered body 15 as illustrated in FIG. 5(a), the sintered body 15 is press-fitted onto the inner periphery of a die 16 as illustrated in FIG. 5(b). With this, the sintered body 15 is deformed by pressing forces of the die 16 and the upper and lower punches 18 and 19, and is subjected to sizing in the radial direction. In accordance therewith, an inner peripheral surface 15a of the sintered body 15 is pressed against a molding die 17a of a core rod 17, and a concavo-convex shape of the molding die 17a is transferred onto the inner peripheral surface 15a of the sintered body 15 so that dynamic pressure grooves are molded in this surface. Simultaneously, a lower end surface 15c of the sintered body 15 is pressed against a molding die (not shown) of an upper end surface 19a of a lower punch 19, and dynamic pressure grooves are formed in this surface. After that, as illustrated in FIG. 5(c), the die 16 is lowered to pull out the sintered body 15 from the die 16 so that the pressing force in the radial direction is released. In this case, in accordance with demolding from the die 16, radial spring back occurs in the sintered body 15 so that minute gaps are formed between the sintered body 15 and the core rod 17, with the result that both the sintered body 15 and the core rod 17 become separable from each other. Then, the sintered body 15 is demolded by pulling out the sintered body 15 from the core rod 17. Note that, in order to facilitate understanding, FIGS. 5 illustrate the depths of the dynamic pressure grooves and the molding die 17a in an exaggerated manner.

In the resin impregnating step, a resin is impregnated in a region except the radial bearing surface (inner peripheral surface 15a) and the thrust bearing surface (end surface 15c) of the sintered body 15. The resin suitably used in this case has low viscosity so as to be easily impregnated into the inner pores of the sintered body 15, which includes an acrylic resin (viscosity: approximately 20 mPa·s) and an epoxy resin (viscosity: approximately 40 to 50 mPa·s). Alternatively, an additive agent such as curative agent may be mixed into a resin solution.

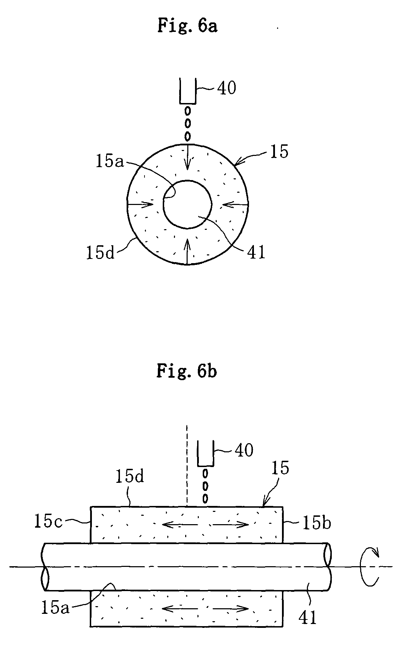

Specifically, as illustrated in FIGS. 6, the sintered body 15 is arranged to be horizontal in the axial direction. A shaft 41 is inserted along the inner periphery of the sintered body 15, and a resin is dripped from a nozzle 40 onto an outer peripheral surface 15d of the sintered body 15 while the sintered body 15 and the shaft 41 are rotated integrally with each other. The resin having been dripped onto the outer peripheral surface 15d penetrates to the radially inner side of the sintered body 15 (refer to an arrow in FIG. 6(a)), and permeates to both axial sides (refer to arrows in FIG. 6(b)). In this case, in order that the resin impregnated in the sintered body 15 does not reach the inner peripheral surface 15a constituting the radial bearing surface and an end surface 15c constituting the thrust bearing surface, adjustments are performed on the following: a dripping amount and a dripping speed of the resin, the viscosity of the resin, rotational speed of the sintered body 15, and a pore rate (density) of the sintered body 15. Further, as illustrated in the figure, when the nozzle 40 is arranged while being offset, with respect to the axial central portion of the sintered body 15, to the side of being separated from the end surface 15c constituting the thrust bearing surface, it is possible to prevent the resin from reaching the end surface 15c constituting the thrust bearing surface. After that, the resin is cured, and the resin impregnating step is completed.

As described above, by performing the sizing step prior to the resin impregnating step, it is possible to perform sizing on the sintered body in which the inner pores thereof are unimpregnated with a resin, and hence possible to sufficiently enhance dimensional accuracy of the bearing sleeve 8 without repulsion of the resin.

Note that, when the sizing step is performed after the resin impregnating step in contrast to the above-mentioned case, there is a risk that the dimensional accuracy of the portion except the bearing surface is deteriorated owing to repulsion of a resin. Meanwhile, according to the above-mentioned resin impregnating step, the pores unimpregnated with the resin (that is, hollow pores) are left in the inner peripheral surface 15a and the lower end surface 15c constituting the bearing surfaces. Thus, plastic deformation of the bearing surface of the sintered body 15 is facilitated in the sizing step, and hence molding accuracy of the bearing surface can be secured. In particular, when the dynamic pressure generating portions (dynamic pressure grooves) are molded in the bearing surface as described above, an amount of plastic deformation in sizing is larger than that in the case of a smooth bearing surface. Thus, it is effective to enhance moldability by leaving the pores unimpregnated with a resin in the bearing surface. Accordingly, in the case where molding can be performed with high dimensional accuracy even after the pores are impregnated with resin by appropriately setting the types of a resin or a pore rate of the sintered body, or in the case of a bearing to be used in a field where high dimensional accuracy is not required in the portion except the bearing surface, it is also possible to perform the sizing step after the resin impregnating step.

The present invention is not limited to the above-mentioned embodiment. In the following, description is made on another embodiment of the present invention, and portions having structures and functions similar to those in the above-mentioned embodiment are denoted by the same reference symbols so that description thereof is omitted.

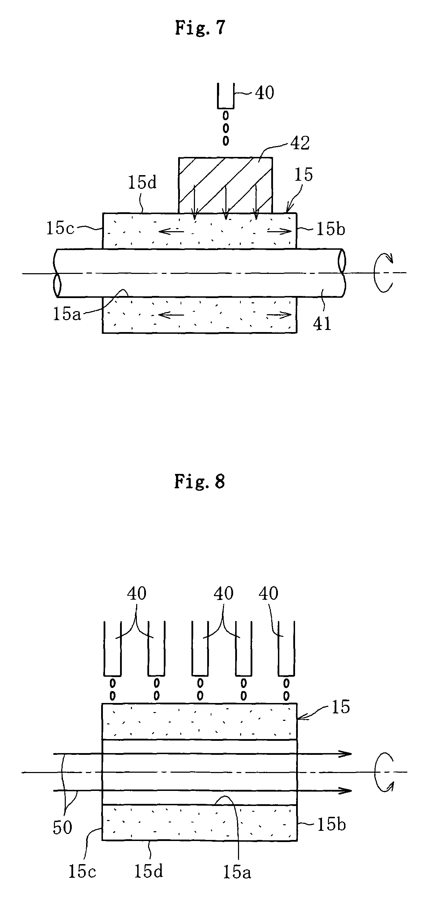

In the above-mentioned embodiment, a resin is dripped from the nozzle 40 directly onto the outer peripheral surface 15d of the sintered body 15 in the resin impregnating step of the bearing sleeve 8. However, this should not be construed restrictively. As illustrated in FIG. 7, it is also possible to impregnate the resin into the sintered body 15 with use of an application member 42 constituted by felt or the like, which is impregnated with a resin in advance. Specifically, by bringing the application member 42 into contact with the outer peripheral surface 15d of the sintered body 15 and rotating the sintered body 15 with respect to the application member 42, the resin impregnated in the application member 42 is drawn to the sintered body 15 side. Similarly to the example illustrated in FIGS. 5, the resin drawn into the sintered body 15 penetrates to the radially inner side and both the axial sides so that the resin is impregnated into the pores in a predetermined region of the sintered body 15. As described above, the application member 42 and the sintered body 15 are brought into contact with each other in a predetermined region in the axial direction so that the resin is supplied to the sintered body 15 through the entire contact region. Therefore, it is possible to uniformly impregnate the resin over the inside of the sintered body 15. Further, as illustrated in the figure, when resin impregnation is effected while the resin is being dripped from the nozzle 40 to the application member 42, it is possible to always retain an ample amount of resin in the application member 42, and hence possible to supply a sufficient amount of resin to the sintered body 15. Further, in order that the resin does not reach the thrust bearing surface, similarly to the nozzle 40 illustrated in FIGS. 5, it is preferred that the application member 42 be arranged while being offset, with respect to the axial central portion of the sintered body 15, in the direction of being separated from the end surface 15c constituting the thrust bearing surface.

Further, in the resin impregnating step illustrated in FIGS. 5, a resin is dripped from the single nozzle 40. However, this should not be construed restrictively. For example, the resin may be dripped from multiple nozzles 40 as illustrated in FIG. 8. Further, simultaneously with dripping of the resin, when airflow 50 is passed as illustrated in the figure by means of an air blower on the inner periphery of the sintered body 15, pressure in the inner peripheral portion of the sintered body 15 is lowered, and hence the resin having been dripped on the outer peripheral surface 15d is more easily impregnated to the radially inner side.

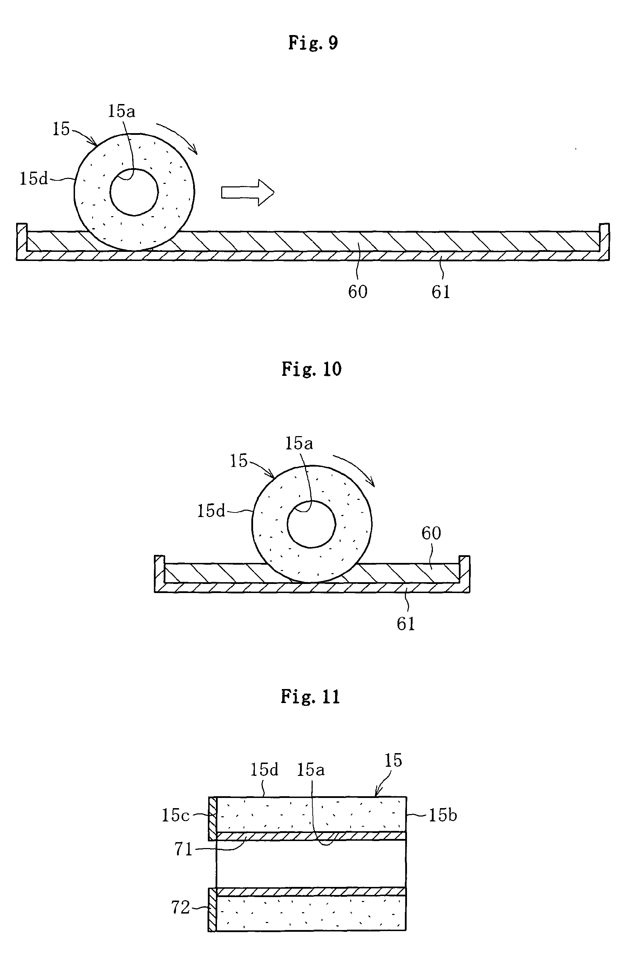

Further, in the above-mentioned embodiment, a resin is dripped from the nozzle 40 provided above the sintered body 15 onto the outer peripheral surface 15d in the resin impregnating step. However, this should not be construed restrictively. For example, a resin may be impregnated by rolling, as illustrated in FIG. 9, the sintered body 15 in a shallow vessel 61 containing a resin 60. Alternatively, instead of rolling the sintered body 15, the sintered body 15 may be fixedly rotated as illustrated in FIG. 10 while the sintered body 15 is held in contact with the resin 60. Note that, according to the methods illustrated in FIGS. 9 and 10, a resin is impregnated into the end surface 15c of the sintered body 15, which constitutes the thrust bearing surface. Meanwhile, the resin is unimpregnated into the inner peripheral surface 15a constituting the radial bearing surface, and the pores unimpregnated with the resin are formed in the radial bearing surface. In this manner, when the pores unimpregnated with the resin are formed at least a part of the bearing surface, effects of the present invention can be realized.

Alternatively, as illustrated in FIG. 11, it is also possible to impregnate the resin by covering, of the sintered body 15, the inner peripheral surface 15a constituting the radial bearing surface and the lower end surface 15c constituting the thrust bearing surface with coatings 71 and 72, respectively, and by immersing the sintered body 15 into a resin solution in this state. It is preferred that each of the coatings be formed of a material capable of preventing intrusion of the resin by physical or chemical effects. Examples of the material usable thereas include film made of polyethylene or the like or a material containing water, such as polyvinyl alcohol gel. With this, the resin is impregnated from the pores formed in the regions of the sintered body 15, which are not covered with the coatings 71 or 72 (outer peripheral surface 15d and upper end surface 15b in illustration). After completion of the impregnation, the sintered body 15 is taken out from the resin solution, and then the coatings 71 and 72 are removed. In this manner, the resin can be impregnated in the region except the radial bearing surface (inner peripheral surface 15a) and the thrust bearing surface (lower end surface 15c) of the sintered body 15.

Further, in the above-mentioned embodiment, a resin is used as sealant impregnated into the sintered bearing. However, this should not be construed restrictively. For example, it is possible to use tin, zinc, a magnesium alloy, or low-melting metal such as solder. In this case, when a metal material is impregnated into all the pores of the sintered bearing, it is difficult to deform by means of sizing, which leads to a risk that a desired dimensional accuracy cannot be obtained. Accordingly, in the case where the metal material is impregnated as sealant, it is especially effective, for the purpose of facilitating adjustment of dimensions by means of sizing, to effect resin impregnation after the sizing step or to open the pores unimpregnated with sealant in the bearing surface.

Further, in the above-mentioned embodiment, there is illustrated the case where the inner peripheral surface 8a and the lower end surface 8c of the bearing sleeve 8 function as bearing surfaces. However, this should not be construed restrictively. For example, the manufacturing method of the present invention is also applicable, for example, to a sintered bearing in which only an inner peripheral surface thereof constitutes a bearing surface.

In the following, description is made on embodiments of a second invention of the subject application with reference to the drawings illustrating the same. This is merely one mode, and does not limit shape of a bearing or apparatuses in which the bearing is used.

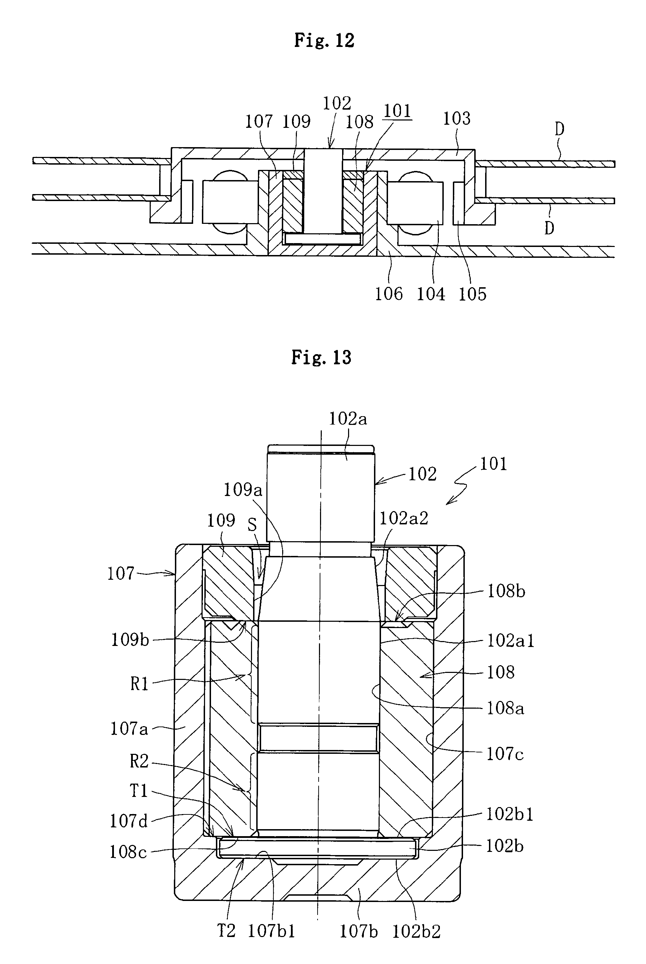

FIG. 12 illustrates one mode of a spindle motor for an information apparatus incorporating a fluid dynamic bearing device 101 including a sintered bearing (bearing sleeve 108) according to an embodiment of the second invention of the subject application. The spindle motor is used for a disk drive such as an HDD and includes the fluid dynamic bearing device 101 for rotatably supporting a shaft member 102 in a non-contact manner, a disk hub 103 mounted to the shaft member 102, a stator coil 104 and a rotor magnet 105 which are opposed to each other through an intermediation of, for example, a gap in a radial direction. The stator coil 104 is attached to an outer periphery of a motor bracket 106 and the rotor magnet 105 is attached to an inner periphery of the disk hub 103. One or multiple magnetic disks (two in FIG. 12) D are held on an outer periphery of the disk hub 103. In the spindle motor structured as described above, the rotor magnet 105 is rotated when the stator 104 is energized. In accordance therewith, the disk hub 103 and the disks D held by the disk hub 103 are rotated integrally with the shaft member 102.

FIG. 13 illustrates one mode of a fluid dynamic bearing device. The fluid dynamic bearing device 101 includes, as main components, the shaft member 102, a housing 107 having a bottomed-cylindrical shape, the bearing sleeve 108 serving as a sintered bearing, and a seal member 109. Note that, in the following, for the sake of convenience, description is made on the assumption that the closed side of the housing 107 in the axial direction is a lower side and the open side thereof is an upper side.

The shaft member 102 is formed of a metal material such as stainless steel, and includes a shaft portion 102a and a flange portion 102b provided at a lower end of the shaft portion 102a. The shaft member 102 may be constituted by the shaft portion 102a and the flange portion 102b integrated with each other, or may be partially (both end surfaces 102b1 and 102b2 of flange portion 102b, for example) formed of a resin. Note that, the flange portion 102b is not necessarily provided. For example, it is possible to constitute a so-called pivot bearing in which a spherical portion is formed at an end portion of the shaft portion and the spherical portion and a bottom portion 107b of the housing 107 are held in sliding contact with each other.

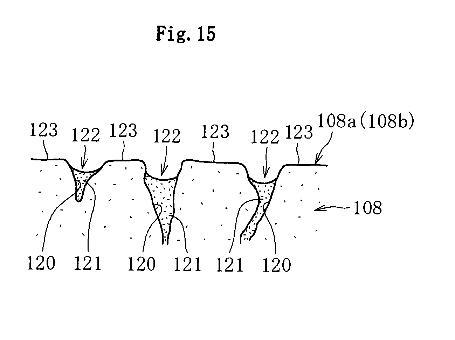

The bearing sleeve 108 is substantially cylindrically formed of sintered metal including copper or copper and steel. An inner peripheral surface 108a of the bearing sleeve 108 functions as a radial bearing surface, and a lower end surface 108c thereof functions as a thrust bearing surface. In the surface and the inside of the bearing sleeve 108, there are formed innumerable pores including independent pores and communicating pores. The pores of the bearing sleeve 108 are impregnated with sealant. The sealant is constituted by an organic material such as polymer (resin, elastomer, rubber or the like) and wax which are solidified under an operating temperature of a bearing, or by an inorganic material such as low-melting metal (tin alloy, zinc alloy, or the like) and low-melting glass. In this embodiment, the pores formed in the surface of the bearing sleeve 108 are sealed with a resin. Specifically, as illustrated in FIG. 15, in the surface of the bearing sleeve 108, sealant 121 is impregnated in pores 120 formed at least in the inner peripheral surface 108a (radial bearing surface) and the lower end surface 108c (thrust bearing surface), and the pores 120 impregnated with the sealant 121 constitute recessed portions 122 in the bearing surface. In this embodiment, the sealant 121 is impregnated in the pores 120 in the entire surface of the bearing sleeve 108. The surface of the sealant 121 impregnated in the pores 120 exhibits a shape of recessing the central portion (mortar shape, bowl shape, or trapezoidal cone shape). In the surface of the bearing sleeve 108, at least in the radial bearing surface and the thrust bearing surface constituting the bearing surfaces, the regions except the recessed portions 122 (contact portions 123) are formed of a base material of sintered metal (copper or copper and steel in this embodiment). As described above, the contact portions 123 to be brought into contact with an outer peripheral surface 102a1 of the shaft member 102 are formed of a metal material, with the result that abrasion resistance can be enhanced.

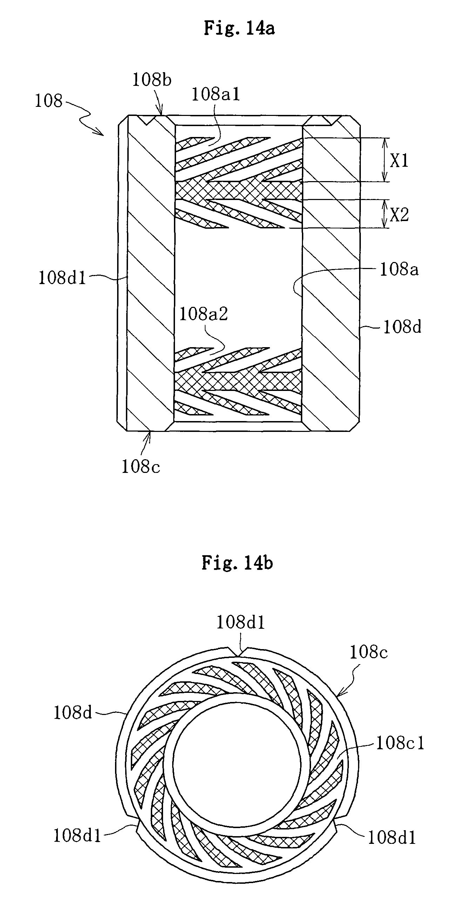

On the inner peripheral surface 108a of the bearing sleeve 108, radial dynamic pressure generating portions for generating dynamic pressure effect in fluid films (oil films) in radial bearing gaps. In this embodiment, as illustrated in FIG. 14(a), two dynamic pressure groove regions where herringbone dynamic pressure grooves 108a1 and 108a2 are respectively arranged are formed separately from each other in the axial direction. In the two dynamic pressure groove regions, portions except the dynamic pressure grooves 108a1 and 108a2, which are illustrated by cross-hatching, constitute hill portions. In the upper dynamic pressure groove region, the dynamic pressure grooves 108a1 are formed asymmetrically in the axial direction. Specifically, with respect to a belt portion formed at substantially the central portion of the hill portion, the axial dimension X1 of the upper grooves is larger than the axial dimension X2 of the lower grooves (X1>X2). In the lower dynamic pressure groove region, the dynamic pressure grooves 108a2 are formed symmetrically in the axial direction. Owing to imbalance of pumping capacity in the upper and lower dynamic pressure groove regions described above, during rotation of the shaft member 102, oil filled between the inner peripheral surface 108a of the bearing sleeve 108 and the outer peripheral surface of the shaft portion 102a is pressed downward.

On the lower end surface 108c of the bearing sleeve 108, there is formed a thrust dynamic pressure generating portion for generating dynamic pressure effect in an oil film in a thrust bearing gap. In this embodiment, as illustrated in FIG. 14(b), the thrust dynamic pressure generating portion has a spiral pattern. In the outer peripheral surface 108d of the bearing sleeve 108, axial grooves 108d1 are formed at equiangular multiple points (three points, for example). In a state in which the outer peripheral surface 108d of the bearing sleeve 108 and an inner peripheral surface 107c of the housing 107 are fixed to each other, the axial grooves 108d1 function as communication paths of oil, and the communication paths are capable of maintaining pressure balance in the bearing within an appropriate range.

The housing 107 has a cup shape in which an axial side is opened and a cylindrical side portion 107a having an inner periphery on which the bearing sleeve 108 is retained and the bottom portion 107b closing the lower end of the side portion 107a are integrated with each other. Materials for the housing 107 are not particularly limited, and include metal such as brass or an aluminum alloy, a resin, and an inorganic material such as glass. Examples of the usable resin material include both a thermoplastic resin and a thermoplastic resin. Further, when necessary, it is possible to use a resin composite obtained by mixing various additives such as glass fiber, a carbon nano material such as carbon fiber or carbon black, and graphite.

In an upper end surface 107b1 of the bottom portion 107b of the housing 107, there is formed, for example, spiral dynamic pressure grooves as a thrust dynamic pressure generating portion for generating dynamic pressure effect in an oil film in a thrust bearing gap (not shown).

The seal member 109 is annularly formed of a resin material or a metal material, and is arranged on the inner periphery of the upper end portion of the side portion 107a of the housing 107. An inner peripheral surface 109a of the seal member 9 is opposed to a tapered surface 102a2 provided on the outer periphery of the shaft portion 102a through an intermediation of a predetermined seal space S. Note that, the tapered surface 102a2 of the shaft portion 102a is gradually reduced upward in diameter (outer side with respect to housing 107), and serves also as a capillary force seal and a centrifugal force seal during rotation of the shaft member 102. An oil level of the lubricating oil filling the inner space of the housing 107 sealed with the seal member 109 is maintained within the range of the seal space S. Note that, when necessary, oil repellency may be imparted to the tapered surface by an oil repellent agent or the like.

When the shaft member 102 is rotated in the fluid dynamic bearing device 101 structured as described above, the inner peripheral surface 108a (radial bearing surface) of the bearing sleeve 108 is opposed to the outer peripheral surface 102a1 of the shaft portion 102a through an intermediation of radial bearing gaps. Then, in accordance with the rotation of the shaft member 102, the lubricating oil in the radial bearing gaps is pressed onto the central sides in the axial direction of the respective dynamic pressure grooves 108a1 and 108a2 so that the pressure thereof is increased. As a result, there are constituted the first radial bearing portion R1 and the second radial bearing portion R2 which support the shaft portion 102a in a non-contact manner by the dynamic pressure effect of the dynamic pressure grooves.

Simultaneously, oil films of the lubricating oil are respectively formed, by the dynamic pressure effect of the dynamic pressure grooves, in the thrust bearing gap between the upper end surface 102b1 of the flange portion 102b and the lower end surface 108c of the bearing sleeve 108 (thrust bearing surface), which is opposed thereto, and in the thrust bearing gap between the lower end surface 102b2 of the flange portion 102b and the upper end surface 107b1 of the bottom portion 107b, which is opposed thereto. As a result, there are constituted the first thrust bearing portion T1 and the second thrust bearing portion T2 which support the flange portion 102b in both the thrust directions in a non-contact manner by the dynamic pressure effect.

In this case, as described above, when the pores (open pores) 120 formed in the bearing surface (inner peripheral surface 108a and lower end surface 108c) of the bearing sleeve 108 is sealed by being impregnated with the sealant 121, lubricancy can be maintained by interposing the lubricating oil in the radial bearing gaps and the thrust bearing gaps. This is because the lubricating oil in the radial bearing gaps and the thrust bearing gaps is not absorbed into the inside of the bearing sleeve 108 even when the shaft member 102 has a low temperature immediately after start of the rotation or the like. Further, it is possible to cause the recessed portions 122 constituted by the pores 120 impregnated with the sealant 121 to function as oil pools, and hence is possible to supply an ample amount of oil into the bearing gaps even during high speed rotation of the shaft member 102. In particular, the central portions of the surface of the sealant 121 are recessed, which constitute the bottom surfaces of the recessed portions 122, and hence more oil can be retained in the recessed portions 122. Further, the oil retained in the recessed portions 122 is consequently brought into contact with the sealant 121. In this context, with use of a material excellent in lipophilicity as the sealant 121, it is possible to reliably retain the oil in the recessed portions 122.

Further, in the case where the dynamic pressure generating portions are provided on the bearing surface of the bearing sleeve 108 so as to positively generate the dynamic pressure effect on the oil films in the bearing gaps, by sealing the pores (surface pores) 120 formed in the bearing surface of the bearing sleeve 108 with the sealant 121, it is possible to prevent so-called "dynamic-pressure absence" so as to reliably increase the pressure of the oil films. In particular, by sealing the pores in the hill portions (crosshatched portions in FIGS. 14) of the bearing surface, where the pressure is increased, it is possible to reliably prevent the dynamic-pressure absence.

In the following, description is made on one mode of a manufacturing method for the bearing sleeve 108 as an embodiment of the bearing sleeve according to the present invention. This is merely one mode, and does not limit a forming method for the recessed portions 122.

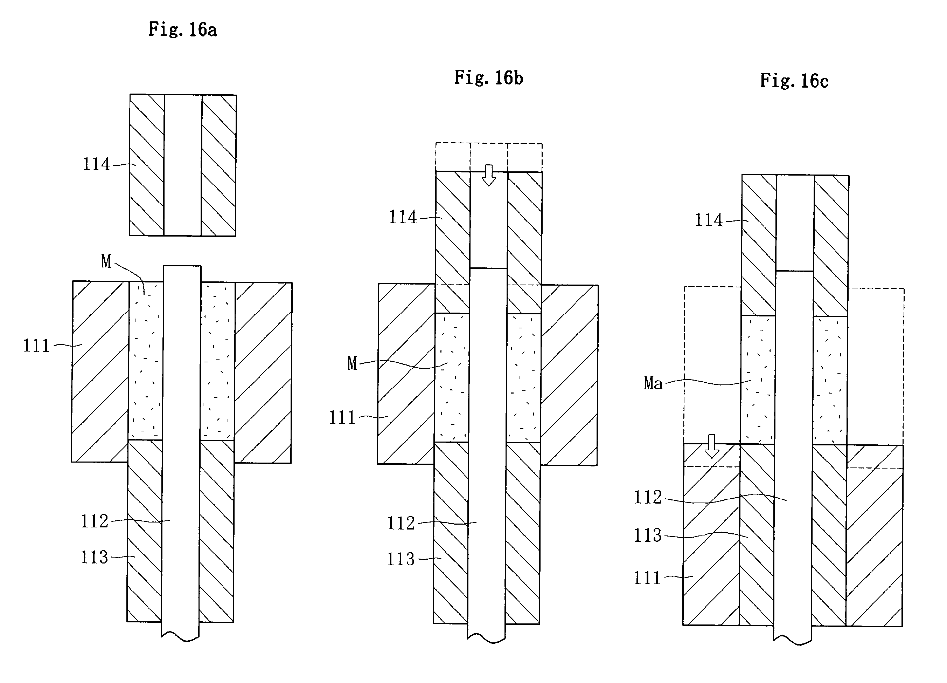

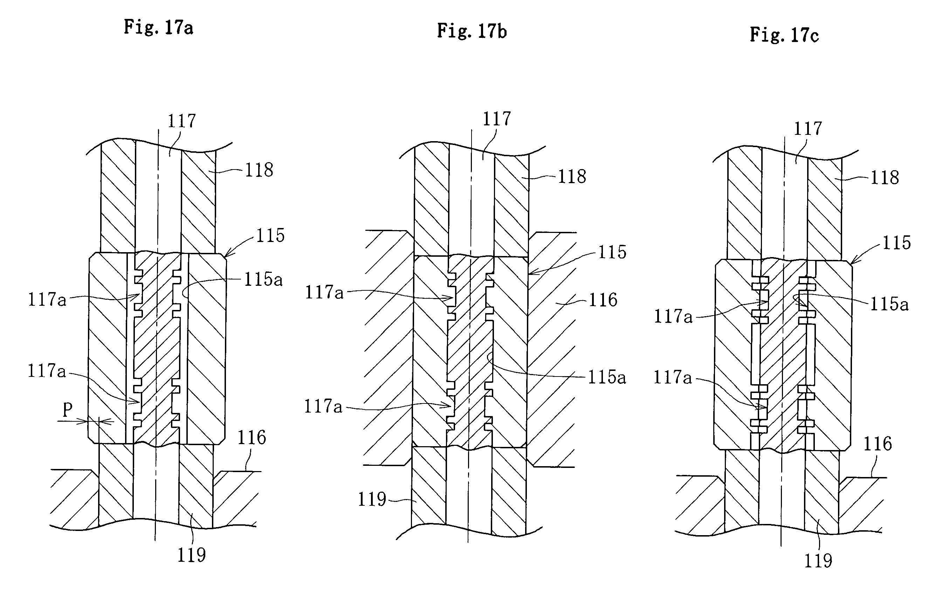

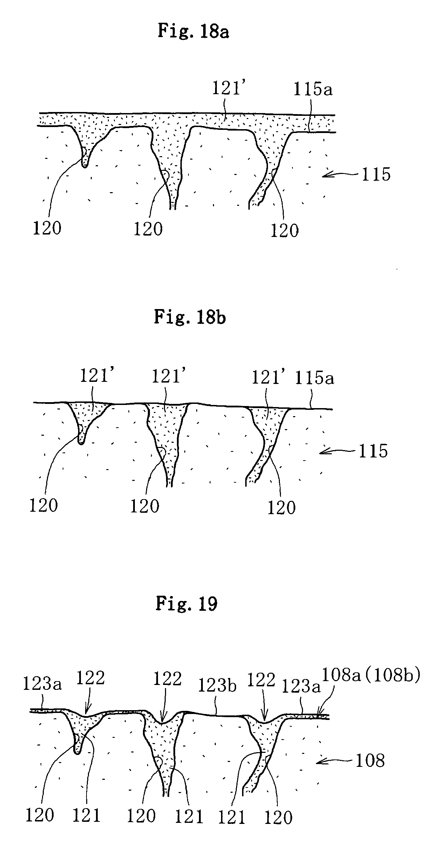

The bearing sleeve 108 is manufactured through a compression-molding step (refer to FIGS. 16), a sintering step (not shown), a sizing step (not shown), a dynamic pressure groove forming step (refer to FIGS. 17), and a sealant-impregnating step (FIGS. 18).

In the compression-molding step, first, as illustrated in FIG. 16(a), metal powder M is loaded in a cavity surrounded by a die 111, a core rod 112, and a lower punch 113. Examples of the metal powder M loaded to be used include copper powder, copper alloy powder, or steel powder mixed therewith. When necessary, an appropriate amount of graphite or the like is added or mixed with respect to the metal powder. In this state, an upper punch 114 is lowered so as to compress the metal powder M from the upper side in the axial direction (refer to FIG. 16(b)). After that, a sintered body is obtained by demolding a compression-molded body Ma (refer to FIG. 16(c)) and sintering the compression-molded body Ma under a predetermined temperature.

In the sizing step, dimensional sizing and rotary sizing are effected on the sintered body so that dimensions of inner and outer peripheral surfaces and a width in the axial direction of the sintered body are appropriately corrected (not shown).

In the dynamic pressure groove forming step, first, in the state in which a sintered body 115 is supported (bound) from both sides in the axial direction by the upper and lower punches 118 and 119 of the sintered body 115 as illustrated in FIG. 17(a), the sintered body 115 is press-fitted onto the inner periphery of a die 116 as illustrated in FIG. 17(b). With this, the sintered body 115 is deformed by pressing forces of the die 116 and the upper and lower punches 118 and 119, and is subjected to sizing in the radial direction. In accordance therewith, an inner peripheral surface 115a of the sintered body 115 is pressed against a molding die 117a of a core rod 117, and a concavo-convex shape of the molding die 117a is transferred onto the inner peripheral surface 115a of the sintered body 115 so that the dynamic pressure grooves 108a1 and 108a2 are molded. After that, as illustrated in FIG. 17(c), the die 116 is lowered to pull out the sintered body 115 from the die 116 so that the pressing force in the radial direction is released. In this case, in accordance with demolding from the die 116, radial spring back occurs in the sintered body 115 so that minute gaps are formed between the sintered body 115 and the core rod 117, with the result that both the sintered body 115 and the core rod 117 become separable from each other. Then, the sintered body 115 is demolded by pulling out the sintered body 115 from the core rod 117. Note that, in order to facilitate understanding, FIGS. 17 illustrate the depths of the dynamic pressure grooves 108a1 and 108a2 and the molding die 117a in an exaggerated manner.

In this manner, the sealant is impregnated into the inner pores of the sintered body 115 provided with the dynamic pressure grooves. In the following, description is made on the sealant-impregnating step of the sintered body 115.

Impregnation of the sealant into the sintered body 115 is effected by immersing the sintered body 115 into liquid sealant in the atmosphere or under vacuum and leaving the same for a predetermined time period. The sealant suitably used in this case includes one having low viscosity so as to be easily impregnated to the inner pores of the sintered body 115. For example, it is desirable that the viscosity be set to 100 mPa.s or less, specifically, 50 mPa·s or less, and more specifically, 30 mPa·s or less. In the case of using sealant having high viscosity, it is possible to adjust the viscosity by controlling temperature or by diluting the sealant with solvent, to reduce surface energy of the liquid sealant by adding surfactant, or to increase diameter of the pores of the sintered body such that impregnation can be achieved.

Ingredients for the sealant are not particularly limited as long as the pores can be sealed by impregnation. Examples of the ingredient for the sealant include low-melting metal (tin alloy, zinc alloy, or the like), low-melting glass, a polymer material (silicone-based resin, acrylic resin, epoxy-based resin, phenolic resin, melamine resin, or the like), and a material such as wax, which is transformed from liquid into solid, that is, solidified during use of a sintered bearing. The ingredient for the sealant may be selected in consideration of contact properties with respect to metal constituting a sintered body, oil resistance and lipophilicity with respect to types of oils to be used, use environment of the bearing, and the like.

On the surface of the sintered body 115 taken out from the liquid sealant, there is formed coating formed of liquid sealant 121' covering, as illustrated in FIG. 18(a), the entire surface including the pores 120 formed in the surface. After that, by removing surplus liquid sealant 121' adhering to the surface of the sintered body 115, the liquid sealant 121' is little left on a surface 115a of the sintered body 115 as illustrated in FIG. 18(b). Examples of the removing methods include air-blowing, sweeping with waste cloth or the like, and rapid cleansing with solvent.

After that, the bearing sleeve 108 is completed by solidifying the liquid sealant 121' impregnated in the sintered body 115 through coagulation or solidification reaction such as cross-linking reaction and polymerization reaction. In this case, owing to volumetric shrinkage at the time of solidification, the liquid sealant 121' filling the pores 120 formed in the surface of the sintered body 115 aggregates to the inner side of the sintered body 115 owing to volumetric shrinkage at the time of solidification thereof. With this, the surface of the solidified sealant 121 retracts to the inner side of the bearing sleeve 108, and the recessed portions 122 are formed in the surface (bearing surface) of the bearing sleeve 108 (refer to FIG. 15). In this case, by adjusting, for example, a time period for immersing the sintered body in the liquid sealant so that pores are left in the sintered body, it is possible to increase a shrinkage amount of the surface of the sealant 121 to the inner side at the time of solidification, and also possible to form deeper recessed portions. Further, also by mixing an additive in the liquid sealant 121' and adjusting an amount of volumetric shrinkage of the sealant through appropriate setting of the types and amount of the additive, it is possible to vary the depths of the recessed portions 122. Note that, at the time of solidification, the liquid sealant 121' is held in contact with the wall surfaces of the pores 120, and hence moves to the inner side of the sintered body 115 by a capillary action. Thus, the shapes of the recessed portions 122 can be changed by adjusting viscosity, a solidification rate, and the like of the liquid sealant 121'. Examples of the shapes include a conical shape, a bowl shape (mortar shape), and a trapezoidal cone shape.

As described above, when the recessed portions 122 formed in the bearing surface are formed by impregnating the sintered body 115 with the liquid sealant 121', machined chips are not generated unlike the case of forming recessed portions in the bearing surface by machine working or the like. Thus, it is possible to omit a cleaning operation of the machined chips, and to avoid a risk that the working powder is mixed as contaminants into the bearing.

Further, after the sintered body 115 undergoes the sizing step and the dynamic pressure groove forming step, the liquid sealant 121' is impregnated and solidified so as to form the recessed portions 122. With this, it is possible to avoid the situation where the recessed portions are caused to disappear owing to the pressure at the time of sizing or formation of the dynamic pressure grooves.

In order to prevent intrusion of the oil into the bearing sleeve 108, it is desirable that the sealant be impregnated into the inner pores of the bearing sleeve 108 at a rate as high as possible. For example, it is desirable that the sealant be impregnated into 60% or more, specifically, 80% or more, and more specifically, 83% or more of all the pores of the bearing sleeve 108.

Note that, when a part of the inner pores of the sintered body 115 are left instead of impregnating the liquid sealant 121' into all the inner pores thereof, the liquid sealant 121' moves into the pores left in the sintered body 115 by a capillary action. Thus, the liquid sealant 121' is cured while the liquid level thereof retracts to the inner side of the sintered body 115. With this, synergistically with an effect obtained by volumetric shrinkage as a result of solidification of the liquid sealant 121' itself, it is possible to reliably form the recessed portions 122 in the bearing surface of the bearing sleeve 108. For example, when the sealant is impregnated into 95% or less, and preferably, 90% or less of all the pores of the bearing sleeve 108, the above-mentioned effect can be obtained.

The rate of the sealant 121 to be impregnated into the inner pores of the bearing sleeve 108 can be adjusted by controlling an immersion time period of the sintered body 115 in the liquid sealant 121'. In order to confirm this, a test was conducted as follows.

A sintered body having density set to 6.5 g/cm³ was formed with use of copper-based metal powder so as to prepare test pieces of three types, which are varied from each other in immersion time period in an acrylic resin solution as sealant (implementation product 1: immersed for 60 minutes, implementation product 2: immersed for 15 minutes, comparison product: unimmersed in the resin). After the resinous sealant in those test pieces was cured, oil was impregnated, and then impregnation amounts were compared with each other. Table 1 shows the result.

**Table 1**

| | Amount of impregnated oil | Ratio of impregnated oil |
|---|---|---|
| Comparison product (unimmersed in resin) | 0.04 g | 1 |
| Implementation product 1 (immersed for 60 minutes) | 0.002 g | 0.05 |
| Implementation product 2 (immersed for 15 minutes) | 0.014 g | 0.37 |

When the sintered body 115 is immersed in the liquid sealant for 60 minutes as in the case of the implementation product 1, the oil is little impregnated thereinto (ratio with respect to comparison product: 0.05). From the amount of the impregnated oil, it is assumed that the sealant is impregnated into and solidified in approximately 95% of the inner pores of the bearing sleeve 108 of the implementation product 1. Meanwhile, when the sintered body 115 is immersed in the liquid sealant for 15 minutes as in the case of the implementation product 2, the oil is impregnated thereinto to some extent (ratio with respect to comparison product: 0.37). From the amount of the impregnated oil, it is assumed that the sealant is impregnated into and solidified in approximately 63% of the inner pores of the bearing sleeve 108 of the implementation product 2. As described above, by varying the immersion time periods of the liquid sealant, it is possible to adjust the amount of impregnated oil, that is, the ratio of impregnated sealant into the pores of the bearing sleeve 108. Therefore, it is sufficient that the immersion time period of the sintered body 115 in the liquid sealant 121' is appropriately set in consideration of an effect of preventing the lubricating oil from being drawn into the bearing sleeve 108 and an effect of facilitating formation of the recessed portions 122 in the bearing surface.

Further, in order to facilitate the formation of the recessed portions 122 in the surface of the bearing sleeve 108, it is also possible, in addition to adjustment of the immersion time period of the sintered body 115 in the liquid sealant as described above, to appropriately set viscosity of the liquid sealant, wetting properties between the liquid sealant and the sintered metal, and a pore rate (density), diameter of the pores and the like of the sintered body 115. Further, by adding silicone oil or a surfactant such as a fluorochemical surfactant, it is possible to control surface energy (surface tension) of the liquid sealant so as to adjust wetting properties or permeability with respect to a base material. Note that, any type of surfactant may be used as long as the surface energy can be controlled. Examples of the surfactant include an anionic one, a cationic one, a nonionic one, and a zwitterionic one, all of which can be selected when necessary.

The present invention is not limited to the above-mentioned embodiments. In the following, description is made on another embodiment of the present invention, and portions having structures and functions similar to those in the above-mentioned embodiments are denoted by the same reference symbols so that description thereof is omitted.

In the above-mentioned embodiments, as illustrated in FIG. 15, in the surface of the bearing sleeve 108, the sealant 121 is impregnated in the inside of the pores 120 formed in the surface, and the contact portions 123 except the recessed portions 122 are formed of sintered metal. However, this should not be construed restrictively. For example, as illustrated in FIG. 19, coating (overlay) of the sealant 121 may be formed on the contact portions 123. In the case of overlay, where a resin or the like having self-lubricancy is used as sealant, the metal shaft member 102 and the sealant 121 having self-lubricancy are held in contact with each other. Therefore, it is possible to prevent abnormal noise generated by contact between metals and so-called co-abrasion. Note that, in this case, the entire surface of the contact portions 123 is not necessarily covered with the sealant 121. As long as at least a part of the contact portions 123 is covered with the sealant, the above-mentioned effects can be obtained. In the illustration, the sliding portion is constituted by a part 123a covered with sealant constituted by a resin and a part 123b constituted by an exposed part of sintered metal. As illustrated, the coating of the sealant 121 is formed on the contact portions 123 merely by slightly leaving a resin on the contact portions 123 in a removing step after impregnation of a resin as illustrated in FIG. 18(b).

Further, in the above-mentioned embodiments, the dynamic pressure grooves in a herringbone pattern or a spiral pattern are exemplified as the dynamic pressure generating portions formed in the sintered bearing. However, this should not be construed restrictively. For example, dynamic pressure generating portions having a multi-arc shape or a stepped shape may be formed, and the bearing surface may be constituted by a smooth surface (cylindrical surface or flat surface) in which the dynamic pressure generating portions are not formed.

Further, in the above-mentioned embodiments, the sintered bearing is used for supporting a rotary shaft of a spindle motor for an information apparatus. However, this should not be construed restrictively. For example, the sintered bearing may be used for supporting a rotary shaft of a fun motor, an electric motor for an automobile, or the like.

Further, other than the above-mentioned modes, the present invention may be particularly used in a slide bearing which is not provided with a dynamic pressure generating portion on a bearing surface thereof.

### Brief Description of the Drawings

FIG. 1 is a sectional view of a spindle motor.
FIG. 2 is a sectional view of a fluid dynamic bearing device.
FIG. 3a is a sectional view of a bearing sleeve.
FIG. 3b is a partial enlarged view of the sectional view of the bearing sleeve.
FIG. 3c is a bottom view of the bearing sleeve.
FIG. 4a is a sectional view illustrating a compression-molding step of the bearing sleeve.
FIG. 4b is a sectional view illustrating a compression-molding step of the bearing sleeve.
FIG. 4c is a sectional view illustrating a compression-molding step of the bearing sleeve.
FIG. 5a is a sectional view illustrating a sizing step of the bearing sleeve.
FIG. 5b is a sectional view illustrating a sizing step of the bearing sleeve.
FIG. 5c is a sectional view illustrating a sizing step of the bearing sleeve.
FIG. 6a is a lateral sectional view illustrating a resin-impregnating step of the bearing sleeve.
FIG. 6b is a vertical sectional view illustrating the resin-impregnating step of the bearing sleeve.
FIG. 7 is a sectional view illustrating another mode of the resin-impregnating step of the bearing sleeve.
FIG. 8 is a sectional view illustrating another mode of the resin-impregnating step of the bearing sleeve.
FIG. 9 is a sectional view illustrating another mode of the resin-impregnating step of the bearing sleeve.
FIG. 10 is a sectional view illustrating another mode of the resin-impregnating step of the bearing sleeve.
FIG. 11 is a sectional view illustrating another mode of the resin-impregnating step of the bearing sleeve.
FIG. 12 is a sectional view of a spindle motor.
FIG. 13 is a sectional view of a fluid dynamic bearing device.
FIG. 14a is a sectional view of a bearing sleeve.
FIG. 14b is a bottom view of the bearing sleeve.
FIG. 15 is an enlarged sectional view of a surface of the bearing sleeve (a bearing surface).
FIG. 16a is a sectional view illustrating a compression-molding step of the bearing sleeve.
FIG. 16b is a sectional view illustrating the compression-molding step of the bearing sleeve.
FIG. 16c is a sectional view illustrating the compression-molding step of the bearing sleeve.
FIG. 17a is a sectional view illustrating a dynamic pressure groove forming step of the bearing sleeve.
FIG. 17b is a sectional view illustrating the dynamic pressure groove forming step of the bearing sleeve.
FIG. 17c is a sectional view illustrating the dynamic pressure groove forming step of the bearing sleeve.
FIG. 18a is an enlarged sectional view of a surface of a sintered body immediately after impregnation of a resin.
FIG. 18b is an enlarged sectional view of a surface of the sintered body, from which the resin is removed.
FIG. 19 is an enlarged sectional view illustrating another mode of a surface of the bearing sleeve (a bearing surface).

### Description of Reference Symbols

- 1: fluid dynamic bearing device
- 2: shaft member
- 7: housing
- 8: bearing sleeve (sintered bearing)
- 9: seal member
- 15: sintered body
- 40: nozzle
- R1, R2: radial bearing portion
- T1, T2: thrust bearing portion
- S: seal space

## Claims

1. A sintered bearing, which is obtained by impregnating sealant into inner pores of a sintered body obtained by sintering a compression-molded body of metal powder,
wherein pores unimpregnated with the sealant are formed in a bearing surface.

2. A sintered bearing according to claim 1, wherein the sealant comprises a resin.

3. A sintered bearing according to claim 1, wherein the sealant comprises low-melting metal.

4. A manufacturing method for a sintered bearing, comprising:
forming a sintered body through sintering of a compression-molded body of metal powder; and
forming, in a bearing surface, pores into which sealant is unimpregnated, by impregnating the sealant from a region except the bearing surface of a surface of the sintered body.

5. A manufacturing method for a sintered bearing according to claim 4, wherein:
the sintered body has a cylindrical shape in which an inner peripheral surface constitutes the bearing surface; and
the sealant is caused to drip onto an outer peripheral surface of the sintered body so as to be impregnated thereinto.

6. A manufacturing method for a sintered bearing according to claim 4, wherein:
the sintered body has a cylindrical shape in which an inner peripheral surface constitutes the bearing surface; and
the sealant is impregnated into the sintered body by rolling the sintered body in a vessel containing the sealant.

7. A manufacturing method for a sintered bearing according to claim 4, wherein the sealant is impregnated by immersion of the sintered body into the sealant in a state in which the bearing surface is covered with coating.

8. A manufacturing method for a sintered bearing according to claim 4, wherein the sealant is impregnated into the sintered body after effecting sizing on the sintered body.

9. A manufacturing method for a sintered bearing according to claim 4, wherein sizing is effected on the sintered body after the impregnation of the sealant into the sintered body.
